# EUROPÄISCHE PATENTSCHRIFT

(11) **EP 2 861 924 B1**
(45) Veröffentlichungstag und Bekanntmachung des Hinweises auf die Patenterteilung: **13.06.2018**
(21) Anmeldenummer: 13726095.6
(22) Anmeldetag: 25.04.2013
(51) Int. Cl.: F27B 3/06, C21C 5/52, C21C 5/56, F27B 3/08, F27B 3/19, F27D 3/15

(54) **VERFAHREN ZUM SCHLACKE- UND METALLABSTICH AUS EINEM ELEKTROLICHTBOGENOFEN SOWIE ELEKTROLICHTBOGENOFEN**
METHOD FOR TAPPING SLAG AND METAL FROM AN ELECTRIC ARC FURNACE AND ELECTRIC ARC FURNACE
PROCÉDÉ DE COULÉE DE SCORIES ET DE MÉTAUX À PARTIR D'UN FOUR À ARC ÉLECTRIQUE ET FOUR À ARC ÉLECTRIQUE

(30) Priorität: 14.06.2012 DE 102012012582
(43) Veröffentlichungstag der Anmeldung: 22.04.2015
(73) Patentinhaber: SMS group GmbH, 40237 Düsseldorf (DE)
(72) Erfinder: ERTL, Markus, 110057 New Dehli (IN); BÜLTENA, Ralf, 45966 Gladbeck (DE); SCHUMACHER, Simone, 46149 Oberhausen (DE)
(74) Vertreter: Klüppel, Walter
(86) Internationale Anmeldenummer: PCT/DE2013/000258
(87) Internationale Veröffentlichungsnummer: WO 2013/185743

(56) Entgegenhaltungen:
- WO-A1-2011/009579
- DE-A1- 3 607 906
- US-A1- 2002 110 175
- DATABASE WPI Week 199750 Thomson Scientific, London, GB; AN 1997-546347 XP002708362, -& JP H09 264522 A (HITACHI ZOSEN CORP) 7. Oktober 1997 (1997-10-07)

## Beschreibung

Die Erfindung betrifft ein Verfahren zum Schlacke - und Metallabstich aus einem Elektrolichtbogenofen mit einem Untergefäß, sich daran anschließenden gekühlten Seitenwänden und einem nach oben den Ofen abschließenden Deckel mit durch diesen hindurch geführten Elektroden,
wobei das Untergefäß einen Metall - Abstichkanal aufweist und zum Schlackenabstich durch eine diametral gegenüberliegende Ofentür in Richtung der Längsachsenebene kippbar ist, gemäß dem Oberbegriff des Patentanspruchs 1 und einen Elektrolichtbogenofen gemäß dem Oberbegriff des Patentanspruchs 3.

Lichtbogenöfen sind in verschiedensten Ausführungen, wie z.B. aus der DE 36 07 906 A1 bekannt. So gibt es beispielsweise Lichtbogenöfen, welche über eine Wiege und solche welche auf Rollenböcke stehend um eine Drehachse in Höhe des Ofendeckels gekippt werden.
Entlang einer Längsachsenebene sind ein Metallabstichkanal und diametral gegenüberliegend eine Öffnung, wie eine Schlackentür, für den Schlackenabstich vorgesehen.
Bekannt sind auch Elektrolichtbogenöfen (EAF) mit exzentrischem Abstich, d. h. der bodenseitige Metall - Abstichkanal ist in einer erkerähnlichen Erweiterung des Untergefäßes angeordnet. Diametral in Längsachsrichtung gegenüberliegend ist im Bereich des oberen Randes des Untergefäßes eine Schlackentür vorgesehen.
Üblicherweise wird der Ofen zunächst in Richtung der Schlackentür gekippt, um die Schlacke, die sich auf der Metallschmelze befindet, abzuziehen.
Der Metallabstich erfolgt dann anschließend durch einen entgegengesetzten Kippvorgang.

Nachteilig bei diesem Abstichverfahren ist, dass während des Abstichs, also in der gekippten Position des Untergefäßes die Elektroden abgeschaltet sein müssen, weil nicht sichergestellt werden kann, dass sich in jeder Kippposition genügend Metall für den Lichtbogen unterhalb der Elektroden befindet.

Es sei zwar erwähnt, dass es durchaus Ansätze gibt den Ofen während des Abstiches nicht ausschalten zu müssen. Allerdings geht dies nur mit großem Sumpfvolumen (Sumpf = Restschmelze, welche im Ofen verbleibt) um damit verbundenen großen Badtiefen. Große Badvolumen helfen zwar den Schmelzvorgang zu homogenisieren und puffern auch große Temperaturunterschiede, führen aber auch zu unnötigen Energieverlusten, da ja mehr Schmelze auf Temperatur gehalten werden muss.

Bedingt durch die zweimalige Kippbewegung verlängert sich aber die sog.tap-to-tap-Zeit.

Aufgabe der vorliegenden Erfindung ist es, die Nebenzeiten, also die Zeiten, in denen das Elektrodensystem abgeschaltet ist, zu verkürzen, mit anderen Worten, die power-on Zeiten zu verlängern oder ggf. ein Abschalten des Ofens komplett zu vermeiden und dennoch einen schlackenfreien EAF-Abstich zu ermöglichen.

Gelöst wird diese Aufgabe erfindungsgemäß mit einem Verfahren zum Schlacke - und Metallabstich aus einem Elektrolichtbogenofen mit einem Untergefäß, sich daran anschließenden gekühlten Seitenwänden und einem nach oben den Ofen abschließenden Deckel mit durch diesen hindurch geführten Elektroden,
wobei das Untergefäß einen Metall - Abstichkanal aufweist und zum Schlackenabstich durch eine diametral gegenüberliegende Ofentür in Richtung der Längsachsenebene kippbar ist, dadurch, dass der Ofen zum Abstich der Schlacke wie auch zum Metallabstich lediglich durch einseitiges Anheben oder Rückstellen, ohne Absenken über den Ausgangspunkt hinaus, gekippt wird.

Erfindungsgemäß erfolgt für beide Abstiche, also den Schlackenabstich und den anschließenden Metallabstich, nur ein Kippen in einer Richtung und wieder zurück zur Ausgangslage oder - position. Damit ist stets gewährleistet, dass sich ausreichend Schmelze unter den Elektroden befindet.

Die Erfindung betrifft auch einen Elektrolichtbogenofen zur Durchführung des Verfahrens.

Der schlackenfreie Abstich ist durch einen, von oberhalb des Abstichkanals, in die Schmelze einfahrenden, feuerfesten und Schlacke verdrängenden Rohrkörper ('Schlackenverdränger') gegeben. Dieser Rohrkörper setzt zum Ende eines Abstiches auf den Abstichkanal auf. Gleichzeitig wird die Ofenspitze zum Beenden eines Abstiches angehoben, so dass sich die Eintrittsöffnung des Abstichkanals oberhalb des Badspiegels befindet.
Der Abstichkanal ist austrittsseitig mit einem konventionellen Schiebersystem ausgestattet.

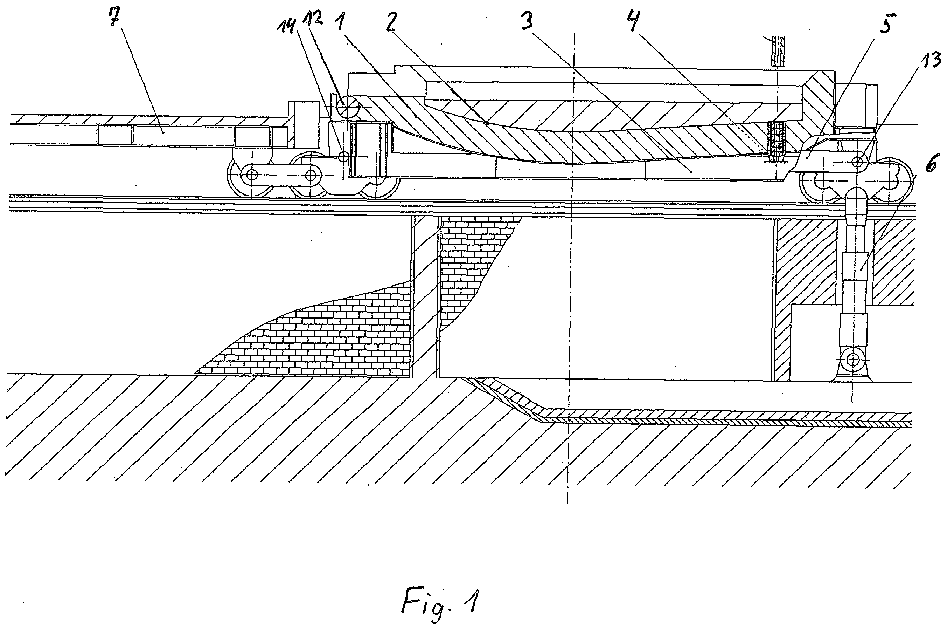

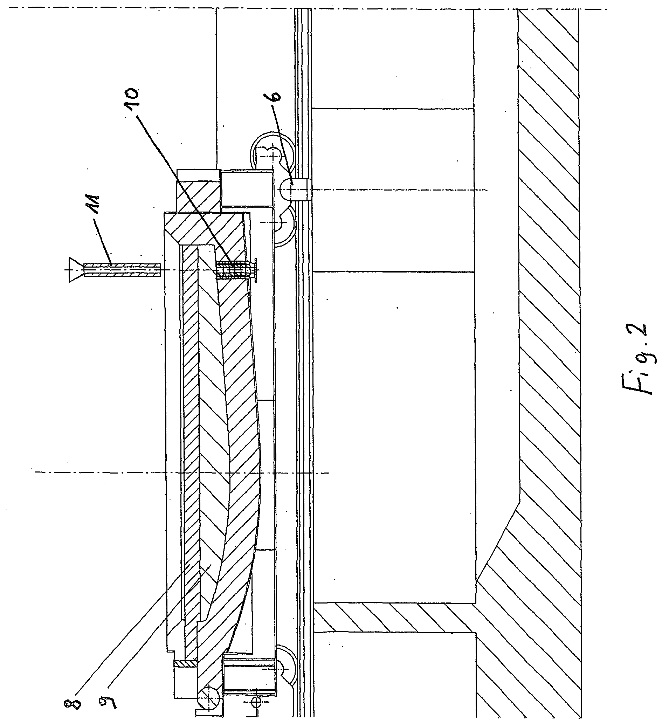

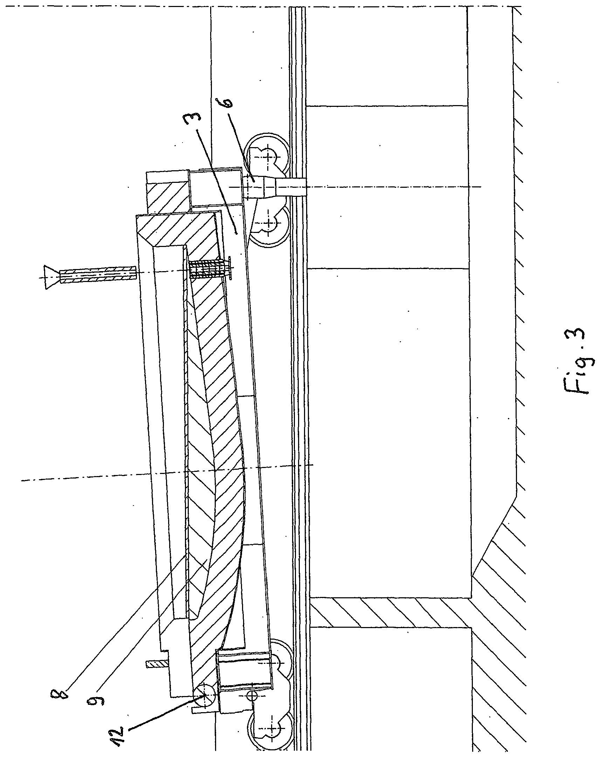

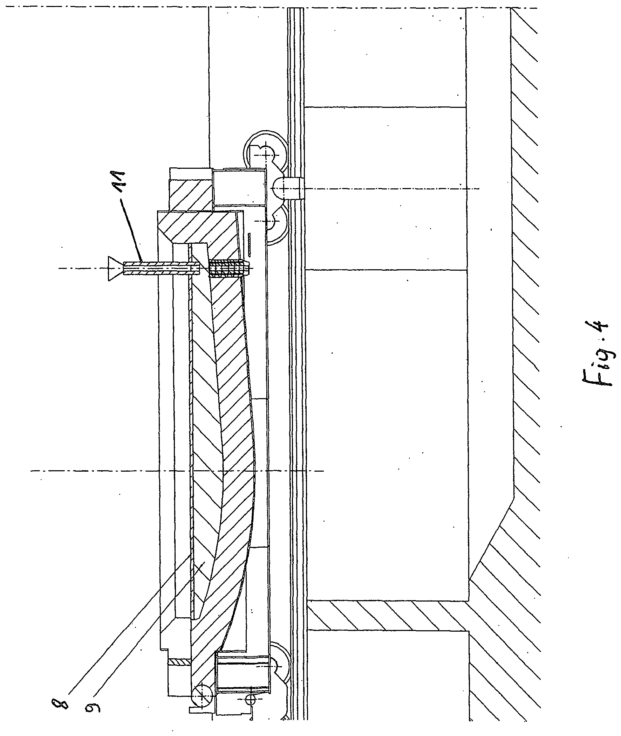

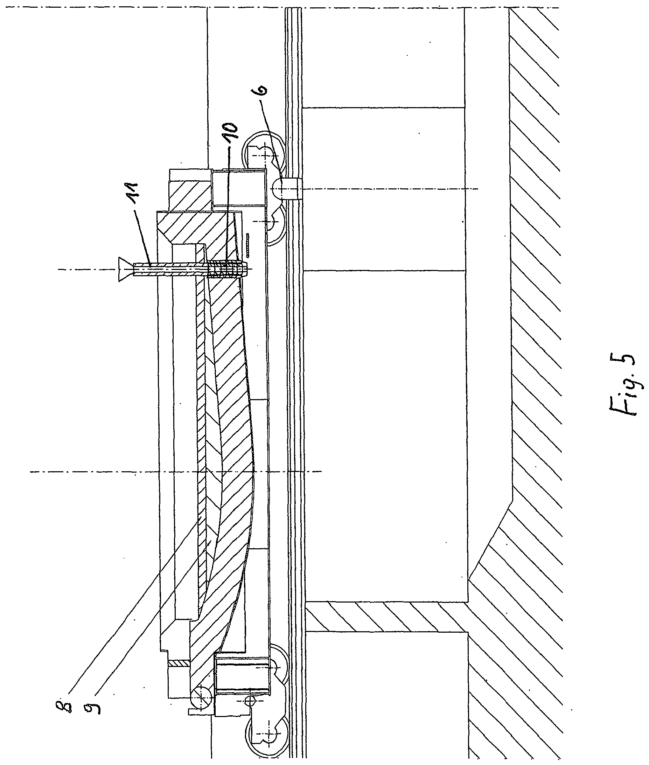

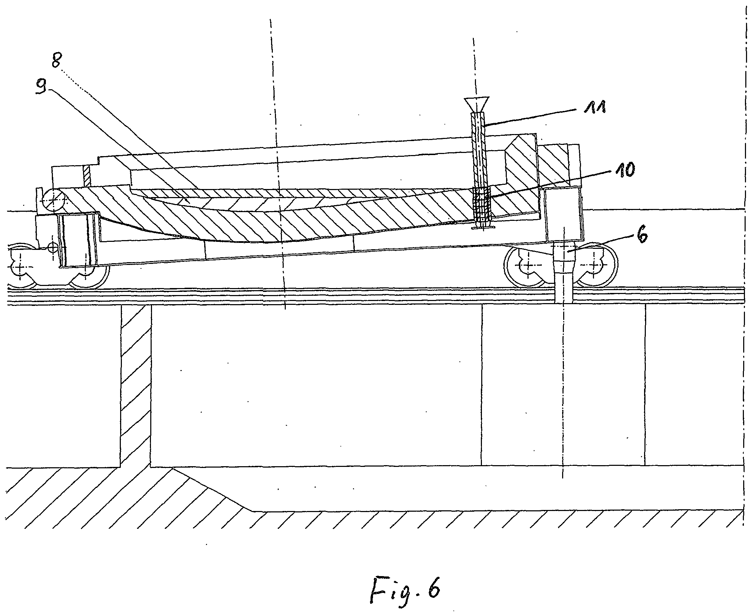

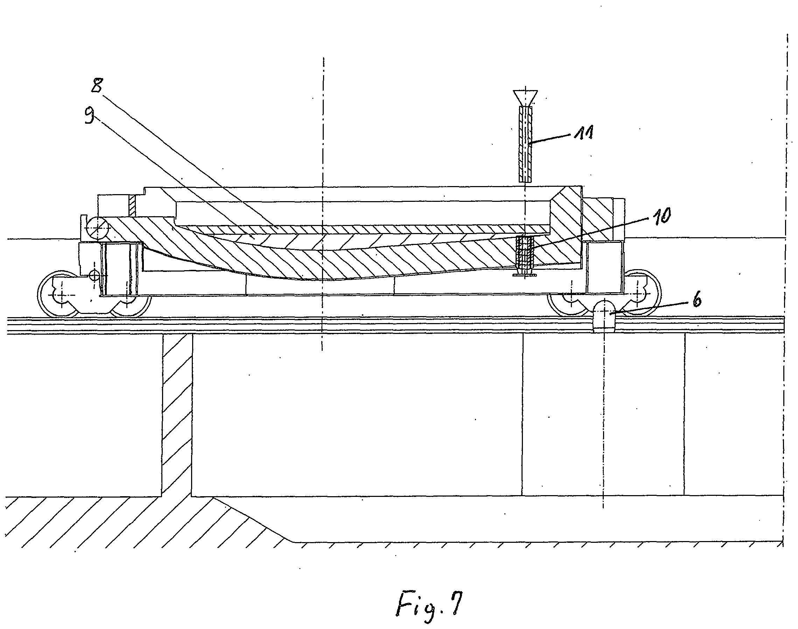

Der Ablauf einer Abstichsequenz zum schlackenfreien Abstich unter"power-on" lässt sich folgendermaßen erklären:
Zu Beginn einer Abstichsequenz wird zunächst die Gefäßspitze (der Bereich des Erkers) angehoben, so dass ggf. überschüssige Schlacke durch die Obergefäß - oder Schlackentür ablaufen kann. Danach wird das Gefäß wieder abgesenkt, der Abstichschieber am auslaufseitigen Ende des im Erkerbereich befindlichen Abstichkanals geöffnet und der Abstich eingeleitet. Von oben wird nun der feuerfeste Rohrkörper in durch die Restschlacke ins Stahlbad eingetaucht. Damit wird der sogenannte Vortex-Effekt unterbunden und ein Ausfließen von Schlacke durch den Abstichkanal verhindert.
Der Abstich wird beendet indem der feuerfeste Rohrkörper von oben auf dem Abstichkanal aufsetzt und diesen bereits weitestgehend verschließt. Nun wird die Gefäßspitze wieder angehoben, bis der Flüssigkeitsspiegel unterhalb des Eintritts in den Abstichkanal liegt. Der Abstich ist nun beendet. Die Abstichkanalpflege kann nun erfolgen und der Abstichschieber wieder geschlossen werden. Von oben wird der Kanal nun durch den feuerfesten Rohrkörper mit Granulat verfüllt. Abschließend wird die Gefäßspitze wieder abgesenkt und der Rohrkörper nach oben aus dem Bad entfernt.
Das oben beschriebene Abstichsystem gewährleistet einen schlackenfreien Abstich, ohne den Heizvorgang zu unterbrechen bzw. den Transformator vom Netz zu trennen.
1. Ofen bereit zum Abstich. (Fig. 1,2) → Gefäß in 0°-Stellung unter power-on".
2. Ofen wird zum Abschlacken angehoben bzw. gekippt.(Fig.3) → Beispielsweise befindet sich das Gefäß in max. -5°-Stellung unter power-on".
3. Nach erfolgtem Abschlacken wird der Ofen wieder abgesenkt. Durch Öffnen des Abstichschiebers wird der Abstich eingeleitet.(Fig.4) → Gefäß in 0°-Stellung unter power-on".
4. Der Schlackenverdränger wird von oben ins Bad eingefahren um den VortexEffekt zu unterbinden.(Fig. 5) → Gefäß in 0°-Stellung unter power-on".
5. Das Abstichende wird eingeleitet indem der Schlackenverdränger auf den Abstichkanal abgesenkt und dieser damit bereits weitestgehend abgedichtet wird. Unmittelbar danach wird der Ofen wieder gekippt, so dass die Öffnung zum Abstichkanal jetzt oberhalb des Badspiegels (Sumpf) liegt. Abstichende. (Fig.6) → Gefäß in -5°-Stellung unter power-on".
6. Die Abstichlochpflege erfolgt von unten über eine Wartungsbühne. Der Abstichschieber wird geschlossen, der Abstichkanal von oben durch den hohlen ,Schlackenverdränger mit Granulat gefüllt. → Gefäß in -5°-Stellung unter power-on".
7. Der Schlackenverdränger" wird hochgefahren und der Ofen wieder gesenkt. Die Abstichsequenz ist beendet. (Fig. 7) → Gefäß in 0°-Stellung unter power-on".

Der voranstehende Ablauf kann auf verschiedene Art und Weise umgesetzt werden, wobei eine Umrüstung bestehender Elektrolichtbogenofen -Systeme dadurch möglich ist, dass einerseits eine nachträgliche Installation des Schlackenverdrängers erfolgt und andererseits ein Blockieren des Kippantriebes in Abstichrichtung erfolgt.

Je nachdem, ob lediglich ein Kippen in Richtung der Ofentür um eine Drehachse möglich ist oder eine eingeschränkte Drehbewegung durch die vorstehend genannte Blockierung möglich ist, kann man von einer gegenständlichen Drehachse oder einer virtuellen Drehachse sprechen.

Nachfolgend wird das erfindungsgemäße Elektrolichtbogenofen-System mit Bezug auf die, ein Ausführungsbeispiel darstellenden, Zeichnungen erläutert, wobei in den Zeichnungen zur Vereinfachung nur das Untergefäß, also der Herd, eines EBT-EAF dargestellt ist. Es fehlt somit die Darstellung der sich nach oben anschließenden Seitenwände des Ofens, sowie der den Ofen verschließende Deckel mit den durch diesen hindurch geführten Elektroden.

Die einzelnen Figuren zeigen den Bewegungsablauf zum Abziehen der Schlacke (Fig. 3) und beim Metallabstich (Fig. 4), bzw. die Zwischenstationen bei der Kippbewegung.

Das Untergefäß 1 ist ähnlich dem eines konventionellen Elektrolichtbogenofens mit exzentrischem Bodenabstich (EBT-EAF) aufgebaut. Ein wesentlicher Unterschied ist der Verzicht auf eine Überhöhung im Bereich der Ofenspitze (Erkersprung), da auf Grund der nicht mehr notwendigen Kippbewegung in Abstich-Richtung diese nicht mehr erforderlich ist. Der Ofenboden 2 verläuft zum Abstich horizontal oder mit geringerer Steigung oder geringerem Gefälle als bisher üblich. Damit ist gleichzeitig eine Totalentleerung ohne zusätzliche Abstichkanäle möglich. Bei geringfügig ansteigendem Gefäßboden wird das Gefäß zur Totalentleerung an der Ofenspitze abgesenkt. Zusätzliche Kanäle zum gleichen Zweck sind auch vorstellbar.
Der Einsatz von Cooling-blocks zur Kühlung der Ausmauerung, sowie der Einbau von, Brennem, Kohle- und Sauerstoffinjektoren ist möglich.
Das - nicht dargestellte - Ofenobergefäß, einschließlich Wandelemente und Ofentürsystem bleiben unverändert. Eine Reduzierung der Anzahl unterschiedlicher Wandelemente ist auf Grund des fehlenden Erkersprunges gegeben.
Das zweiteilige Abstichsystem 10,11 besteht aus einem konventionellen Abstichschiebersystem 10 und einem oberhalb des Abstichkanals 4, in die Schmelze einfahrenden, feuerfesten und Schlacke verdrängenden Rohrkörper 11 (Schlackenverdränger).
Mit 12 ist die Schaffplatte bezeichnet, die die Abflusskante der Schlacke bildet.

Das Ofengefäß wird von einem fahrbaren Tragrahmen 3 (ähnlich Pfannentransportwagen) getragen, der mittels der Vorrichtung 7 verfahrbar ist. Der Tragrahmen 3 ist parallel zur Ofenlängsachse verfahrbar. Die ofentürseitige Fahrzeugachse 14 dient als Drehachse für die Kippbewegungen des Ofens. Die ofenabstichseitige Achse 13 des Fahrzeuges ist über Schwingen 5 mit dem Tragrahmen gelenkig verbunden. Zwischen diesen Schwingen sind an der Tragrahmenunterseite halbkugelförmige Lagerpfannen angeordnet.
In der Behandlungsposition, befindet sich unterhalb der zuvor beschriebenen Lagerpfannen je ein ortsfester Ofenkippzylinder 6, mit halbkugelförmigem Zylinderstangenende. Zum Kippen des Ofens (Abschlacken, Abstichende) werden diese Zylinder ausgefahren, Lagerpfannen und Zylinderstangenenden in Kontakt gebracht und die Ofenspitze angehoben. Der Hauptrahmen dreht sich nun um die ofentürseitige Fahrzeugachse 14, die abstichseitige Fahrachse 13 wird entlastet.

Das Fahrzeugsystem wird in Höhe des Ofendeckelherzes gegen unbeabsichtigtes wegrollen gesichert. Dazu verfügt der Hauptrahmen über seitliche Konsolen mit nach außen zeigenden Führungsbolzen. Diese Bolzen werden in vertikal angeordneten, wegklappbaren Schienen geführt. Damit wird erreicht, dass der Ofen in Höhe des Eintritts der Elektroden in das Ofeninnere, keine horizontalen Bewegungen mehr fahren kann. Lediglich vertikale und rotierende Bewegung infolge des Kippens werden zugelassen. Folglich ist gewährleistet, dass die Elektroden in Arbeitsposition verbleiben können und der Ofen während der Abstichsequenz nicht abgeschaltet werden muss.

Der Tragrahmen trägt gleichzeitig eine mitfahrende Abstichkanalwartungsbühne, sowie einen mitfahrenden Bühnenteil vor der Ofentür als Ergänzung zur feststehenden Ofenbühne, um die notwendigen Arbeiten in diesem Bereich ausführen zu können.

### Daraus ergeben sich folgende Vorteile:

konventionelles und vielfach bewährtes Abstichsystem verwendbar, kürzere Gefäßwechselzeiten durch fahrzeuggebundene Gefäße, feststehendes, nicht schwenkendes und nicht kippendes Ofendeckelsystem möglich, feststehendes, nicht schwenkendes und nicht kippendes Ofenportal- und Elektrodentragarmsystem möglich, Reduzierung der hydraulischen Antriebe (Schwenken, Schwenkverriegelung) möglich, kein Großwälzlager erforderlich, geringerer Wartungs- und Instandhaltungsaufwand, geringere Ersatzteillagerhaltung, kürzere Nebenzeiten beim Chargieren, kürzere tap-to-tap-Zeiten, da längere power-on-Zeiten" möglich, schlackenfreier Abstich bei power-on", kein schwerer Hallenkran zum Gefäßwechsei erforderlich, geringere Investitionskosten.

## Patentansprüche

1. Verfahren zum Schlacke - und Metallabstich aus einem Elektrolichtbogenofen mit einem Untergefäß, sich daran anschließenden gekühlten Seitenwänden und einem nach oben den Ofen abschließenden Deckel mit durch diesen hindurch geführten Elektroden, wobei das Untergefäß einen Metall - Abstichkanal aufweist und zum Schlackenabstich durch eine diametral gegenüberliegende Ofentür in Richtung der Längsachsenebene kippbar ist,
**dadurch gekennzeichnet,**
**dass** der Ofen zum Abstich der Schlacke wie auch zum Metallabstich lediglich durch einseitiges Anheben oder Rückstellen, ohne Absenken über den Ausgangspunkt hinaus, gekippt wird.

2. Verfahren nach Anspruch 1,
**dadurch gekennzeichnet,**
**dass** das Untergefäß sowohl zum Abstich der Schlacke wie auch zum Metallabstich lediglich um eine auf der Seite der Ofentür liegende virtuelle oder gegenständliche Drehachse durch Anheben oder Rückstellen der Metall abstichseitigen Untergefäßseite gekippt wird.

3. Elektrolichtbogenofen zur Durchführung des Verfahrens nach einem der vorstehenden Ansprüche, mit einem Untergefäß, sich daran anschließenden gekühlten Seitenwänden und einem nach oben den Ofen abschließenden Deckel mit durch diesen hindurch geführten Elektroden,
wobei das Untergefäß einen Metall - Abstichkanal aufweist und eine dem Metall-Abstichkanal diametral gegenüberliegende Ofentür zum Schlackenabstich und wobei der Ofen in Richtung der durch den Abstichkanal gelegten Längsachsenebene kippbar ist, **dadurch gekennzeichnet,**
**dass** der Ofen mit einem Kippantrieb versehen ist, den Ofen Metall-Abstichkanal seitig von einer Horizontalposition in eine vorgegeben Schräglage anhebt und zurück bewegt.

4. Elektrolichtbogenofen nach Anspruch 3,
**dadurch gekennzeichnet,**
**dass** sich das Untergefäß auf einem Tragrahmen befindet, der parallel zur Längsachsenebene verfahrbar ist.

5. Elektrolichtbogenofen nach Anspruch 4,
**dadurch gekennzeichnet,**
**dass** die ofentürseitige Fahrzeugachse des verfahrbaren Tragrahmens als gegenständliche Drehachse für die Kippbewegungen des Ofens dient.

6. Elektrolichtbogenofen nach einem der vorstehenden Ansprüche,
**dadurch gekennzeichnet,**
**dass** zum schlackenfreie Metall-Abstich ein von oberhalb des Abstichkanals, in die Schmelze einführbarer, feuerfester, rohrförmiger Schlackenverdränger vorgesehen ist, der zum Ende eines Abstiches auf den Abstichkanal aufsetzbar ist.

## Claims

1. Method for tapping slag and metal from an electric arc furnace with a lower vessel, cooled side walls connected therewith and a lid, which upwardly closes the furnace, with electrodes led therethrough, wherein the lower vessel has a metal tapping channel and is tiltable in the direction of the longitudinal axis plane for tapping off slag through a diametrically opposite furnace door, **characterised in that** for tapping the slag and also for tapping metal the furnace is tilted merely by lifting or resetting at one side without lowering beyond the starting point.

2. Method according to claim 1, **characterised in that** for tapping both the slag and metal the lower vessel is tilted merely about a virtual or actual axis of rotation on the furnace door side by raising or resetting the lower vessel side at the metal tapping side.

3. Electric arc furnace for carrying out the method according to one of the preceding claims, with a lower vessel, cooled side walls connected therewith and a lid, which upwardly closes off the furnace, with electrodes led therethrough, wherein the lower vessel has a metal tapping channel and a furnace door, which is diametrically opposite the metal tapping channel, for tapping slag and wherein the furnace is tiltable in the direction of the longitudinal axis plane passing through the tapping channel, **characterised in that** the furnace is provided with a tilt drive, which lifts the furnace metal tapping channel laterally from a horizontal position into a predetermined inclined position and moves it back.

4. Electric arc furnace according to claim 3, **characterised in that** the lower vessel is disposed on a support frame movable parallel to the longitudinal axis plane.

5. Electric arc furnace according to claim 4, **characterised in that** the vehicle axis, which is at the furnace door side, of the movable support frame serves as an actual axis of rotation for the tilt movements of the furnace.

6. Electric arc furnace according to any one of the preceding furnace claims, **characterised in that** provided for slag-free metal tapping is a refractory tubular slag displacing means which is introducible from above the tapping channel into the melt and which at the end of tapping is placeable on the tapping channel.

## Revendications

1. Procédé pour la coulée de laitier et de métal à partir d'un four à arc électrique comprenant une carcasse, des parois latérales refroidies qui s'y raccordent et un couvercle qui ferme le four depuis le haut, comprenant des électrodes guidées à travers lui, la carcasse présentant un canal de coulée pour le métal et étant capable de basculer pour la coulée de laitier à travers une porte du four diamétralement opposée, dans la direction du plan de l'axe longitudinal, **caractérisé en ce que** qu'on fait basculer le four, pour la coulée du laitier comme pour la coulée du métal, uniquement par soulèvement unilatéral ou par replacement en position initiale, sans abaissement au-delà du point de départ.

2. Procédé selon la revendication 1, **caractérisé en ce qu'**on fait basculer la carcasse, aussi bien pour la coulée du laitier que pour la coulée du métal uniquement autour d'un axe de rotation virtuel ou physique disposé du côté de la porte du four, par soulèvement ou replacement en position initiale du côté de la carcasse situé du côté de la coulée du métal.

3. Four à arc électrique pour la mise en oeuvre du procédé selon l'une quelconque des revendications précédentes, comprenant une carcasse, des parois latérales refroidies qui s'y raccordent et un couvercle qui ferme le four depuis le haut, comprenant des électrodes guidées à travers lui, dans lequel la carcasse présente un canal de coulée pour le métal et une porte du four diamétralement opposée au canal de coulée pour le métal, pour la coulée du laitier, et dans lequel on peut faire basculer le four dans la direction du plan de l'axe longitudinal passant par le canal de coulée, **caractérisé en ce que** le four est équipé d'une commande de basculement qui soulève et ramène le canal de coulée du métal latéralement depuis une position horizontale jusqu'à une position inclinée prédéfinie.

4. Four à arc électrique selon la revendication 3, **caractérisé en ce que** la carcasse se trouve sur un cadre de support qui peut se déplacer parallèlement au plan de l'axe longitudinal.

5. Four à arc électrique selon la revendication 4, **caractérisé en ce que** l'axe du chariot du cadre de support mobile, côté porte du four, fait office d'axe de rotation physique pour les mouvements de basculement du four.

6. Four à arc électrique selon l'une quelconque des revendications précédentes, **caractérisé en ce que**, pour la coulée du métal exempt de laitier, on prévoit un dispositif de refoulement du laitier de forme tubulaire, réfractaire, que l'on peut introduire dans la masse fondue, qui vient se poser sur le canal de coulée au terme d'une coulée.
